# FASCICULE DE BREVET EUROPEEN

(11) **EP 3 320 584 B1**
(45) Date de publication et mention de la délivrance du brevet: **04.06.2025**
(21) Numéro de dépôt: 16750937.1
(22) Date de dépôt: 07.07.2016
(51) Int. Cl.: H01R 13/18, B64G 1/42, B64G 1/58, H01R 13/04, H01R 13/627, H01R 13/64

(54) **DISPOSITIF DE CONNEXION ÉLECTRIQUE, PROCÉDÉ D'ASSEMBLAGE D'UNE PARTIE FEMELLE DE CE DISPOSITIF DE CONNEXION, MATELAS SUPER ISOLANT ET ENGIN SPATIAL**
VORRICHTUNG ZUR ELEKTRISCHEN VERBINDUNG, VERFAHREN ZUR MONTAGE EINES BUCHSENTEILS DIESER VERBINDUNGSVORRICHTUNG, SUPERISOLIERDECKE UND RAUMFAHRZEUG
DEVICE FOR ELECTRICAL CONNECTION, METHOD OF ASSEMBLING A FEMALE PART OF THIS CONNECTION DEVICE, SUPERINSULATING BLANKET AND SPACECRAFT

(30) Priorité: 09.07.2015 FR 1501460
(43) Date de publication de la demande: 16.05.2018
(73) Titulaire: Airbus Defence and Space SAS, 31402 Toulouse Cedex 4 (FR)
(72) Inventeur: CESARI, Philippe, 31402 TOULOUSE Cedex 4 (FR); COTTIER, Jacques, 31402 TOULOUSE Cedex 4 (FR); CLAUDET, Vincent, 31402 TOULOUSE Cedex 4 (FR)
(74) Mandataire: Plasseraud IP
(86) Numéro de dépôt international: PCT/FR2016/051737
(87) Numéro de publication internationale: WO 2017/006064

(56) Documents cités:
- EP-A1- 2 530 366
- EP-B1- 2 530 366
- DE-A1- 102012 223 557
- FR-A1- 2 860 349
- FR-B1- 2 860 349

## Description

La présente invention se situe dans le domaine des engins spatiaux et en particulier dans les satellites artificiels. Dans ces engins, tous les objets doivent être reliés à la masse pour éviter les décharges électrostatiques. Cette mise à la masse est généralement réalisée par connexion à un panneau de structure du satellite.

La présente invention concerne un dispositif de connexion électrique destiné à connecter un matelas super isolant à un panneau de structure d'un engin spatial, un matelas super isolant et un engin spatial.

Les matelas super isolants généralement appelés MLI (de l'anglais « Multi-Layer Insulation ») sont, par exemple, utilisés pour isoler thermiquement un ensemble d'équipements fonctionnant sur une plage de températures d'un autre ensemble d'équipements fonctionnant sur une autre plage de températures. Ces matelas super isolants sont également utilisés pour isoler thermiquement un panneau de l'engin spatial contre les effets du chauffage par le soleil et contre la perte de chaleur par rayonnement du côté espace. Ces matelas super isolants sont composés d'une feuille ou d'un empilement de plusieurs feuilles isolantes thermiquement et conductrices électriquement et éventuellement de treillis non conducteur électriquement intercalées entre les feuilles conductrices électriquement. Ces treillis sont utilisés pour favoriser l'isolation thermique par séparation des éléments. Cet empilement de feuilles et éventuellement de treillis présente une épaisseur inférieure au millimètre. Traditionnellement, pour mettre le matelas super isolant à la masse, les feuilles sont perforées puis fixées ensemble à l'aide d'un rivet ou d'un ensemble vis-écrou. Afin d'assurer un bon contact électrique entre, d'une part, ce rivet ou l'ensemble vis-écrou et, d'autre part, toutes les couches conductrices électriquement, on intercale entre ces couches un matériau conducteur, comme par exemple des rondelles métalliques. Un câble électrique est assemblé au rivet simultanément ou ultérieurement et fixé à un insert encastré dans le panneau de structure du satellite.

Toutefois, ce montage présente de nombreux désavantages. En effet, lors de la réalisation du satellite, il peut être nécessaire d'enlever un matelas super isolant, par exemple pour remplacer un équipement qui n'a pas donné satisfaction lors des tests, pour effectuer une vérification supplémentaire sous les matelas super isolants ou pour ajouter un nouvel équipement ou une nouvelle fonction demandé par le client. Dans ces cas, le câble électrique qui relie l'insert au matelas super isolant doit être déconnecté. Cette déconnection est délicate car les feuilles du matelas super isolant sont très fragiles. Elles se déchirent facilement ou se détériorent de sorte que le matelas super isolant n'assure plus vraiment sa fonction d'isolation.

De plus, souvent, une dizaine de câbles électriques sont fixés à chaque insert de sorte que lors de la reconnexion des câbles électriques à l'insert, l'opérateur peut oublier de reconnecter un câble. Pour éviter un tel oubli, toutes les connexions électriques sont testées après le montage final d'un ou de plusieurs matelas super isolants. Cette opération est longue et délicate.

Enfin, le positionnement des inserts par rapport aux panneaux de structure de l'engin spatial, doit être déterminé très en amont, lors de la conception, car, en raison de leur faible épaisseur, les panneaux de structure ne peuvent être perforés. Ils doivent être conçus avec les orifices de réception des inserts. Or, comme la durée de construction d'un satellite est de plus en plus courte et que le cahier des charges des clients évolue au cours du temps, il est difficile de prévoir par avance le positionnement des inserts. Pour pallier à cet inconvénient, des câbles électriques plus longs peuvent être utilisés pour relier l'insert du panneau au rivet du matelas. Néanmoins, ces câbles électriques sont coûteux et alourdissent le satellite. De plus, ces câbles passent sous les matelas voisins, ce qui rend leur installation compliquée.

Par ailleurs, le document DE 10 2012 223557, lequel décrit le préambule de la revendication 1, divulgue un ensemble de contacts de fiche pour connecter des modules de batterie. Le document EP 2 530 366 divulgue un matelas superisolant pourvu d'un trou traversant et d'une entretoise bordant le trou traversant. Le document FR 2 860 349 divulgue un dispositif de connexion pour panneau sandwich.

Le but de la présente invention est de proposer un dispositif de connexion électrique qui soit facilement connectable et déconnectable sans risque de déchirement ou de détérioration du matelas super isolant, et sans dépendre de la présence ou non des matelas voisins ainsi que des câbles électriques pré-installés.

A cet effet, la présente invention a pour objet un dispositif de connexion électrique conformé selon les caractéristiques de la revendication 1.

Avantageusement, ce dispositif de connexion électrique peut être facilement monté et démonté sans détérioration du matelas super isolant.

Avantageusement, ce dispositif de connexion électrique est beaucoup moins long à installer pour l'opérateur que les systèmes par câble et insert.

Avantageusement, ce dispositif de connexion permet une fixation du matelas super isolant au panneau de structure du satellite simultanément à la connexion électrique.

Avantageusement, ce dispositif de connexion est beaucoup plus léger que l'emploi de câble électrique.

Selon des modes de réalisation particuliers, le dispositif de connexion comporte l'une ou plusieurs des caractéristiques suivantes:
- L'élément élastique comprend une tige métallique pliée de manière à former un polygone ayant n côtés, avec n compris entre 2 et 10, et de préférence n égal à 5.
- L'élément élastique est ouvert.
- Le support présente la forme d'une couronne tronquée qui s'étend sur un secteur angulaire compris entre 40° et 320°.

Avantageusement, l'emploi de formes différentes pour le support et l'élément élastique assure l'existence de point de contact entre ceux-ci.
- Le support comporte une gorge en arc de cercle et dans lequel l'élément élastique est agencé dans ladite gorge.

Avantageusement, ladite gorge permet la fixation axiale de l'élément élastique.
- Le pion comporte un pied pourvu d'une tête plane.

Avantageusement, la tête plane peut être facilement collée à la structure conductrice et par conséquent être facilement positionnée à l'endroit nécessaire sur la structure du satellite.
- La longueur du pied est comprise entre 1 fois et 2,5 fois la longueur du manchon et dans lequel le dispositif de connexion électrique comporte une butée d'arrêt amovible encastrée sur l'extrémité libre du pied.

Avantageusement, le manchon peut coulisser le long du pion. Cette possibilité de mouvement autorise un jeu vertical du matelas par rapport à un panneau de structure de l'engin spatial. Ce jeu vertical facilite le montage et le démontage d'un matelas par rapport à ce panneau de structure. L'élément élastique et la différence de longueur entre le pion et le manchon assurent un contact électrique permanent entre le manchon et le pion tout en autorisant une mobilité axiale du pion par rapport au manchon, lors de la mise en place ou lors des manipulations du matelas.

Avantageusement, la butée amovible empêche la sortie involontaire du manchon sur le pion qui autrement provoquerait une rupture indésirable de la connexion électrique.
- L'extrémité libre du pied est chanfreinée ou arrondie.

Avantageusement, cette forme facilite l'insertion du pion dans le manchon en écartant progressivement l'élément élastique de sa position de repos.
- L'élément élastique comporte un segment de tige central, deux segments de tige intermédiaires, chacun, coudé par rapport au segment de tige central, et deux segments de tige d'extrémité, chacun, coudé par rapport à un segment de tige intermédiaire, et dans lequel les angles entre les segments de tige sont des angles obtus, lesdits angles étant sensiblement identiques, lorsque l'élément élastique n'est pas contraint.
- Les segments de tige d'extrémité sont propres à exercer sur le support une force ayant une direction sensiblement radiale et dans lequel la longueur des segments de tige d'extrémité est supérieure à la longueur des segments de tige intermédiaires.
- Le dispositif de fixation axiale comporte une collerette périphérique au manchon s'étendant dans un plan perpendiculaire à la première direction et dans lequel le support comporte deux faces planes s'étendant dans un même plan, ledit plan étant sensiblement perpendiculaire au plan de la collerette, lesdites faces planes étant des faces d'appui de l'élément élastique, lorsque le pion conducteur est dégagé dudit manchon.

Avantageusement, le segment central de l'élément élastique est en appui sur les faces planes du support, lorsque le pion n'est pas agencé dans le manchon.
- La longueur du segment de tige central est sensiblement supérieure à la longueur défini entre les extrémités des faces planes du support, et dans lequel l'angle entre le segment de tige central et le segment de tige intermédiaire est sensiblement identique à l'angle défini entre les faces planes du support et la face externe du support.

Ainsi, avantageusement, l'élément élastique est ajusté autour du support à un jeu près.
- Le dispositif de fixation axiale du matelas isolant comporte une rondelle, une extrémité libre du manchon et la collerette.

Avantageusement, le matelas super isolant est solidaire du dispositif de connexion électrique et est ainsi facilement manipulable sans être endommagé.

L'invention a également pour objet un procédé d'assemblage conforme aux caractéristiques de la revendication 13.

En particulier, l'étape d'établissement d'une butée comprend une étape au cours de laquelle l'extrémité libre du manchon est évasée.

En particulier, l'étape d'établissement d'une butée comprend une étape de serrage de l'extrémité libre du manchon.

Avantageusement, la connexion électrique entre les feuilles conductrices et le manchon est assurée uniquement par la collerette, la rondelle et la surface externe du manchon. La pression exercée de manière calibrée permet d'assurer que la pression résiduelle exercée sur le matelas super isolant soit suffisante et soit reproductible, garantissant ainsi la continuité de la connexion électrique, sans avoir à intercaler des éléments conducteurs électriquement.

L'invention a également pour objet un ensemble matelas super isolant et dispositif de connexion électrique selon les caractéristiques mentionnées dans la revendication 16.Enfin, l'invention a également pour objet un engin spatial selon les caractéristiques mentionnées dans la revendication 17.

L'invention sera mieux comprise à la lecture de la description qui va suivre, donnée uniquement à titre d'exemple et faite en se référant aux figures sur lesquelles :
- La figure 1 est une vue en perspective d'un dispositif de connexion selon la présente invention ;
- La figure 2 est une vue en perspective éclatée du dispositif de connexion illustré sur la figure 1 ;

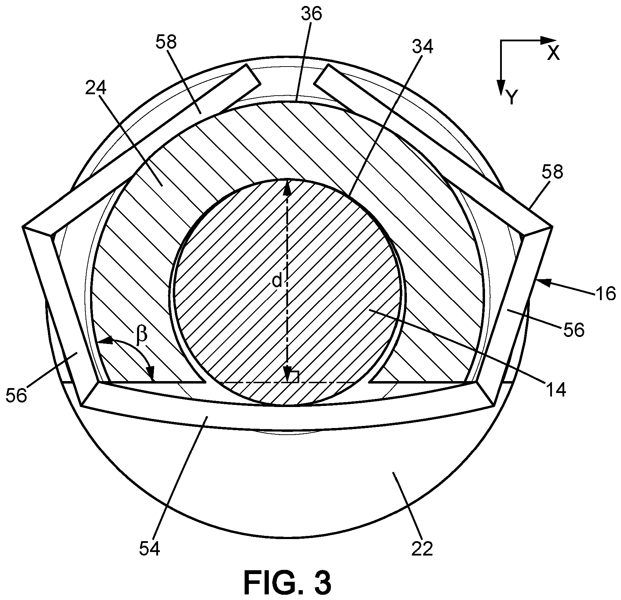

- La figure 3 est une vue en coupe selon le plan III-III du dispositif de connexion illustré sur la figure 1 ;
- La figure 4 est une vue en coupe d'un panneau de structure et d'un matelas super isolant fixé au panneau par le dispositif de connexion illustré sur la figure 1 et d'un arrêt , le plan de coupe étant perpendiculaire au plan du matelas super isolant ; et
- La figure 5 est une vue de face d'un arrêt.

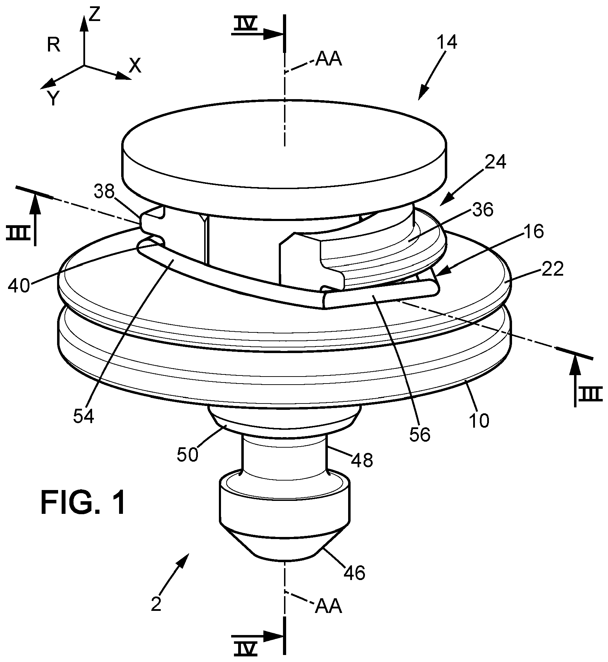

La présente invention est définie par rapport à un repère orthogonal R (x, y, z) représenté sur la figure 1. Par convention, dans la description qui va suivre, la direction z du repère R (x, y, z) est appelée « première direction », la direction x de ce repère est appelée « seconde direction » et la direction y de ce repère est appelée « troisième direction ». Dans la description qui va suivre, les termes « haut », « bas », « inférieur », « supérieur », sont définis lorsque le dispositif de connexion selon l'invention est disposé comme illustré sur la figure 1, et ne sont nullement limitatifs.

La présente invention concerne un dispositif de connexion 2 propre à connecter électriquement les feuilles 4 constitutives d'un ou de plusieurs matelas super isolant 6 à un panneau de structure 8. Dans la suite de la description, il sera considéré que le dispositif de connexion 2 est fixé à un seul matelas 6. Cet agencement a pour but de facilité la compréhension de l'invention. Il n'est nullement limitatif.

En référence aux figures 1, 2 et 4, le dispositif de connexion 2 selon l'invention comporte une rondelle 10, un manchon conducteur 12, un pion conducteur 14 propre à être introduit et retiré du manchon 12 lors de la connexion et lors de la déconnexion du matelas super isolant 6 au panneau de structure 8, et un élément élastique 16 propre à pousser le pion 14 contre le manchon 12 pour le plaquer contre le manchon et assurer le contact électrique entre ceux-ci.

Préférentiellement, la rondelle 10 est réversible.

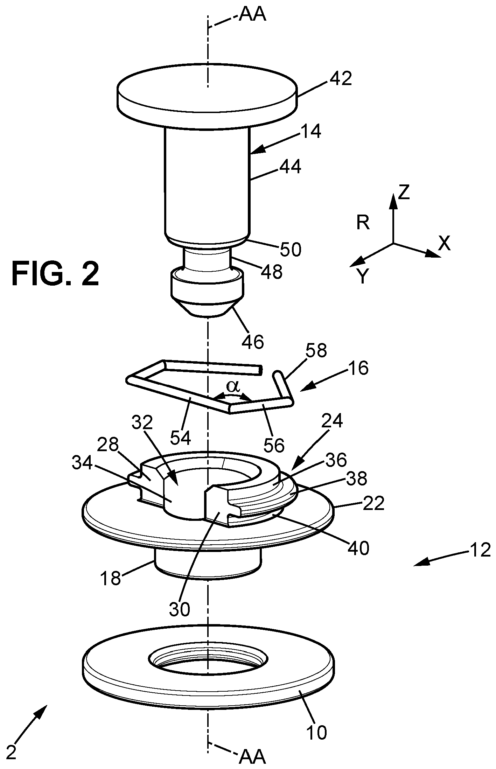

En référence à la figure 2, le manchon 12 comporte, de bas en haut, une extrémité libre 18 et une extrémité 20 pourvue d'une collerette périphérique 22 et d'un support 24 disposé au-dessus de la collerette 22.

Le manchon 12 présente un axe A-A qui s'étend selon la première direction z. La collerette 22 est disposée dans un plan (x, y) perpendiculaire à la première direction z.

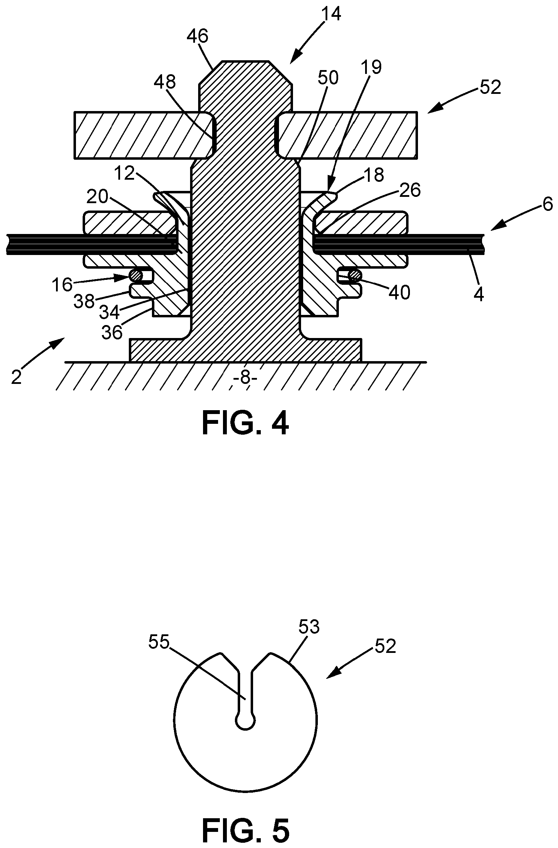

Comme visible sur la figure 4, le manchon 12 est destiné à être introduit dans des orifices traversants 26 pratiqués dans les feuilles 4 du matelas. Ces feuilles 4 sont isolantes thermiquement et conductrices électriquement. Elles seront appelées feuilles conductrices 4 ci-après. Lorsque le dispositif de connexion 2 est fixé au matelas 6, les feuilles conductrices 4 du matelas super isolant sont intercalées entre la rondelle 10 et la collerette 22. L'extrémité libre 18 du manchon est destinée à former ou recevoir un dispositif de blocage/écrasement du matelas. La collerette 22, la rondelle 10 et l'extrémité libre 18 du manchon forment un dispositif de fixation axiale des feuilles conductrices du matelas super isolant.

Selon le mode de réalisation préféré, l'axe A-A du manchon 12 possède une symétrie centrale et a une forme circulaire. Cependant, selon d'autres modes de réalisation non limitatives, d'autres formes sont possibles pour le manchon 12, comme par exemple une forme carré.

Le support 24 s'étend selon la première direction z. Il présente la forme d'une couronne tronquée qui s'étend dans le plan (x, y) sur un secteur angulaire compris entre 40° et 320°. Cette couronne présente un axe sensiblement confondu avec l'axe A-A du manchon 12.

Le plan de coupe (x, z) de la couronne tronquée s'étend sensiblement perpendiculairement au plan dans lequel la collerette 22 est contenue. Il est disposé à une distance d définie de manière à générer deux plans de section et une ouverture 32 de passage du pion disposée entre les deux plans de section. Les deux plans de section forment des faces planes 28, 30 d'appui de l'élément élastique. Ces deux faces planes 28, 30 s'étendent dans un même plan qui est le plan de coupe.

La distance d est la distance maximale entre un point de la face intérieure 34 du manchon et sa projection orthogonale sur le plan de coupe (x, z). Cette distance d est inférieure au diamètre du pion 14.

Lorsque le pion 14 n'est pas agencé dans le manchon 12, l'élément élastique 16 est en appui contre les faces planes 28, 30 du support. Lorsque le pion 14 est agencé dans le manchon 12, une partie du pion s'étend en saillie à l'extérieur du support 24, par l'ouverture de passage 32. L'élément élastique 16 est alors en appui sur le pion 14 et exerce sur celui-ci une force sensiblement perpendiculaire à l'axe du manchon 12.

La face externe 36 du support est pourvue d'un bourrelet 38 en arc de cercle. Ce bourrelet 38 définit avec la collerette 22 une gorge 40 de réception de l'élément élastique 16. Cette gorge 40 s'étend sur un arc de cercle.

Le pion conducteur 14 comporte une tête 42 et un pied 44.

La tête 42 est préférentiellement plane et lisse. Elle est propre à être collée sur le panneau de structure 8, à l'aide d'une colle électriquement conductrice.

Avantageusement, ce collage électriquement conducteur peut être réalisé plus tardivement dans la réalisation du satellite car l'emplacement du collage n'a pas besoin d'être défini au moment de la conception des panneaux de structure du satellite. De plus, en cas de mauvais positionnement du pion, un autre pion peut facilement être collé à un autre emplacement.

Le pied 44 présente une longueur comprise entre 1 fois et 2,5 fois la longueur du manchon 12 selon la première direction z de sorte que le manchon peut coulisser axialement par rapport au pion pour autoriser un léger déplacement du matelas super isolant 6 par rapport au panneau de structure 8.

Le pied 44 comporte de bas en haut, un premier chanfrein d'entrée 46, une rainure circulaire 48 et un deuxième chanfrein d'entrée 50.

Les premier 46 et deuxième 50 chanfreins d'entrée facilitent l'insertion du pion 14 dans le manchon 12, lorsque l'élément élastique 16 est monté sur le support.

Avantageusement, la rainure circulaire 48 est propre à recevoir une butée 52 d'arrêt du manchon.

Cette butée d'arrêt est amovible. Elle est propre à bloquer une sortie involontaire du pion 14 par rapport au manchon 12. L'épaisseur de la butée d'arrêt doit être adaptée pour assurer qu'il y aura toujours au moins un contact entre l'élément élastique et le pion, y compris en tenant compte de la réversibilité du manchon 12. Ainsi, l'épaisseur de la butée doit être suffisante pour maintenir le ressort sous la limite basse du deuxième chanfrein d'entrée 50.

A titre d'exemple non limitatif, la butée d'arrêt comprend un disque 53 présentant une fente radiale 55.

Préférentiellement, la butée d'arrêt est réversible.

L'élément élastique 16 est, par exemple, constitué par une tige. Cette tige est réalisée en métal et de de préférence en acier. Elle présente, par exemple, un diamètre inférieur au millimètre.

Selon le mode de réalisation représenté sur les figures, cette tige 16 est pliée en forme de pentagone ouvert.

Ainsi, dans le mode de réalisation de l'invention représenté, l'élément élastique 16 comporte un segment de tige central 54, deux segments de tige intermédiaires 56, chacun coudé par rapport au segment de tige central 54, et deux segments de tige d'extrémité 58, chacun coudé par rapport au segment de tige intermédiaire 56 qui lui est adjacent.

Le segment de tige central 54 est apte à exercer une force sensiblement perpendiculaire à la première direction z pour plaquer le pion 14 contre le manchon 12.

Les segments de tige d'extrémité 58 sont propres à exercer sur le support 24 une force ayant une direction sensiblement radiale lorsque le pion 14 est agencé dans le manchon 12. A cet effet, la longueur des segments de tige d'extrémité 58 est de préférence supérieure à la longueur des segments de tige intermédiaires 56.

La forme et la matière de l'élément élastique 16 ainsi que les dimensions du pion 14 et du manchon 12 sont choisies de manière à ce que la contrainte exercée par le pion 14 sur l'élément élastique 16 soit inférieure à la limite d'élasticité de l'élément élastique de manière à assurer un contact électrique fiable et durable entre le manchon 12, le pion 14 et l'élément élastique 16.

Avantageusement les formes conjointes de l'élément élastique 16 et du support 24 créent quatre contacts mécaniques et électriques simultanés et permanents : deux contacts électriques entre l'élément élastique 16 et le support 24, un contact entre l'élément élastique 16 et le pion 14 et un contact entre le pion 14 et le manchon 12.

Dans le mode de réalisation représenté et de manière nullement limitative, l'élément élastique est ajusté autour du support 24. Ainsi, la longueur du segment de tige central 54 est sensiblement supérieure à la longueur définie entre les extrémités des faces planes 28, 30 du support et l'angle α entre le segment de tige central 54 et le segment de tige intermédiaire 56 est sensiblement identique à l'angle β défini entre les faces planes 28, 30 du support et la face externe 36 du support.

Dans le mode de réalisation représenté, les angles α définis entre les segments de tige 54, 56, 58 sont des angles obtus. Ces angles α sont sensiblement identiques, lorsque l'élément élastique 16 n'est pas contraint.

En variante, l'élément élastique est constitué par une patte plane.

En variante, l'élément élastique présente la forme d'un polygone à n côtés avec n compris entre 2 et 10.

En variante, l'élément élastique présente la forme d'un U ou d'un cercle ouvert ou fermé.

En variante, l'extrémité du pied est arrondie.

En variante, le dispositif de fixation axiale peut être remplacé par un pas de vis réalisé à l'extrémité libre du manchon et par l'emploi d'un écrou.

En variante, le support comprend au moins une paroi plane ou courbe sur laquelle l'élément élastique est attaché pour pousser le pion contre la paroi intérieure du manchon.

Selon une variante non représentée, les formes conjointes de l'élément élastique et du support génèrent au moins trois contacts mécaniques et électriques simultanés et permanents : au moins un contact électrique entre l'élément élastique 16 et le support 24, au moins un contact entre l'élément élastique 16 et le pion 14 et au moins un contact entre le pion 14 et le manchon 12. En fonction de la forme de l'élément élastique et de son positionnement sur le manchon 12, des contacts supplémentaires sont possibles, au-delà de ces trois contacts minimaux.

Par ailleurs, pour assurer le contact électrique entre les feuilles conductrices électriquement et les treillis non conducteurs du matelas super isolant, les orifices des treillis présentent un diamètre supérieur au diamètre du manchon et des rondelles sont disposées dans le manchon, chacune intercalée entre deux feuilles conductrices adjacentes. Ces rondelles permettent d'assurer la conductivité électrique entre le manchon et les feuilles conductrices électriquement.

Toutefois, ces rondelles sont mises en place manuellement. Cette mise en place est longue et couteuse.

La présente invention a pour deuxième but de diminuer la durée et les couts de montage du manchon au matelas super isolant.

A cet effet, la présente invention propose un procédé de montage d'un élément d'assemblage à un matelas super isolant.

Ce procédé peut être utilisé pour assembler de une à vingt-quatre feuilles conductrices 4. Ce procédé permet d'assembler mécaniquement et de réaliser simultanément une connexion électrique entre les feuilles conductrices et un rivet creux ou une partie femelle du dispositif de connexion électrique selon la présente invention. Dans ce dernier cas, la partie femelle du dispositif de connexion comprend la rondelle, le manchon et l'élément élastique et la partie mâle comporte le pion conducteur.

Ce procédé d'assemblage comporte les étapes suivantes :
- réaliser un orifice traversant 26 dans les feuilles conductrices 4 du matelas super isolant 6 ;
- emmancher le manchon 12 du dispositif de connexion électrique 2 ou tout autre rivet dans lesdits orifices traversants 26 de manière à plaquer les feuilles conductrices 4 contre ladite collerette 22 ;
- disposer ladite rondelle 10 sur les feuilles conductrices 4 ;
- établir une butée 19 sur l'extrémité libre 18 du manchon 12, ladite butée 19 étant propre à appliquer sur les feuilles conductrices un effort compris entre 20 déca Newton et 60 déca Newton.

Avantageusement, cet effort assure la connexion électrique permanente et définitive entre les feuilles conductrices, le manchon, la collerette et la rondelle sans nécessiter l'utilisation de rondelles intercalées entre les feuilles conductrices ou de collage d'un adhésif intermédiaire.

Préférentiellement, le diamètre de l'orifice traversant 26 est sensiblement égal au diamètre extérieur du manchon. Ainsi, les orifices traversants sont ajustés contre le manchon de manière à assurer un contact électrique entre les tranches des feuilles conductrices et la face externe du manchon.

Selon un mode de réalisation de ce procédé, la butée 19 est établie par emboutissage de l'extrémité libre 18 du manchon 12. Cet emboutissage est obtenu en appliquant une pression comprise entre 250 déca Newton et 600 déca Newton à l'aide d'un outil adapté.

Selon une autre variante, la butée 19 est établie en filetant l'extrémité libre du manchon 12 et en y vissant une vis de serrage. Le serrage pouvant s'effectuer de façon manuelle ou automatique à l'aide d'une machine.

En variante, le procédé d'assemblage selon l'invention peut également être utilisé avec un simple rivet creux.

N'importe quel outil permettant d'appliquer une pression résiduelle sur le matelas super-isolant calibrée, suffisante pour assurer un contact électrique et reproductible peut être utilisé.

## Revendications

1. Dispositif de connexion électrique (2) destiné à connecter un matelas super isolant (6) à un panneau de structure (8) d'un engin spatial, ledit dispositif de connexion (2) comportant :
- un manchon (12) conducteur ayant un axe (A-A) s'étendant selon une première direction (z), ledit manchon (12) comportant un support (24) s'étendant selon la première direction (z),
- un pion (14) conducteur propre à être agencé dans ledit manchon (12),
- un élément élastique (16) porté par ledit support (24), ledit élément élastique (16) étant propre à exercer sur le pion (14) une force dans une direction sensiblement perpendiculaire à la première direction (z),
**caractérisé en ce que** le manchon (12) comporte un dispositif (10, 18, 22) de fixation propre à fixer axialement le matelas super isolant (6), ledit dispositif de fixation comprenant :
- une collerette (22) périphérique au manchon située sur une extrémité (20) du manchon et s'étendant dans un plan perpendiculaire à la première direction (z),
- une rondelle (10), le matelas super isolant (6) étant destiné à être intercalé entre la rondelle et la collerette (22), et
- une butée (19) établie sur l'extrémité libre (18) du manchon (12),
et **en ce que** ledit élément élastique (16) plaque le pion (14) contre le manchon (12).

2. Dispositif de connexion électrique (2) selon la revendication 1, dans lequel l'élément élastique (16) comprend une tige métallique pliée de manière à former un polygone ayant n côtés, avec n compris entre 2 et 10, et de préférence n égal à 5.

3. Dispositif de connexion électrique (2) selon l'une quelconque des revendications 1 et 2, dans lequel l'élément élastique (16) est ouvert.

4. Dispositif de connexion électrique (2) selon l'une quelconque des revendications 1 à 3, dans lequel le support (24) présente la forme d'une couronne tronquée qui s'étend sur un secteur angulaire compris entre 40° et 320°.

5. Dispositif de connexion électrique (2) selon l'une quelconque des revendications 1 à 4, dans lequel le support (24) comporte une gorge (40) en arc de cercle et dans lequel l'élément élastique (16) est agencé dans ladite gorge (40).

6. Dispositif de connexion électrique (2) selon l'une quelconque des revendications 1 à 5, dans lequel le pion (14) comporte un pied (44) pourvu d'une tête plane (42).

7. Dispositif de connexion électrique (2) selon la revendication 6, dans lequel la longueur du pied (44) est comprise entre 1 fois et 2,5 fois la longueur du manchon (12) et dans lequel le dispositif de connexion électrique (2) comporte une butée d'arrêt (52) amovible encastrée sur l'extrémité libre du pied.

8. Dispositif de connexion électrique (2) selon l'une quelconque des revendications 6 et 7, dans lequel l'extrémité libre du pied (44) est chanfreinée ou arrondie.

9. Dispositif de connexion électrique (2) selon l'une quelconque des revendications 1 à 8, dans lequel l'élément élastique (16) comporte un segment de tige central (54), deux segments de tige intermédiaires (56), chacun coudé par rapport au segment de tige central (54) et deux segments de tige d'extrémité (58), chacun coudé par rapport à un segment de tige intermédiaire (56), et dans lequel les angles (α) entre les segments de tige sont des angles obtus, lesdits angles (α) étant sensiblement identiques, lorsque l'élément élastique (16) n'est pas contraint.

10. Dispositif de connexion électrique (2) selon la revendication 9, dans lequel les segments de tige d'extrémité (58) sont propres à exercer sur le support (24) une force ayant une direction sensiblement radiale et dans lequel la longueur des segments de tige d'extrémité (58) est supérieure à la longueur des segments de tige intermédiaires (56).

11. Dispositif de connexion électrique (2) selon la revendication 4 ou à l'une quelconque des revendications 5 à 10 prises en combinaison avec la revendication 4, dans lequel le support (24) comporte deux faces planes (28, 30) s'étendant dans un même plan, ledit plan étant sensiblement perpendiculaire au plan de la collerette (22), lesdites faces planes (28, 30) étant des faces d'appui de l'élément élastique (16), lorsque le pion conducteur est dégagé dudit manchon (12).

12. Dispositif de connexion électrique (2) selon la combinaison des revendications 9 et 11, dans lequel la longueur du segment de tige central (54) est sensiblement supérieure à la longueur définie entre les extrémités des faces planes (28, 30) du support, et dans lequel l'angle (α) entre le segment de tige central (54) et le segment de tige intermédiaire (56) est sensiblement identique à l'angle (β) défini entre les faces planes (28, 30) du support et la face externe (36) du support.

13. Procédé d'assemblage d'une partie femelle (10, 12, 16) d'un dispositif de connexion électrique à un matelas super isolant (6), ledit matelas super isolant (6) comprenant de une à vingt-quatre feuilles conductrices (4) ; la partie femelle (10, 12, 16) du dispositif de connexion électrique comprenant :
- un manchon (12) conducteur ayant un axe (A-A) s'étendant selon une première direction (z), et comportant un support (24) s'étendant selon la première direction (z), un pion conducteur (14) étant destiné à être agencé dans le manchon (12) ; ledit manchon (12) comportant une extrémité libre (18) et une extrémité (20) pourvue d'une collerette périphérique (22) s'étendant dans un plan perpendiculaire à la première direction, et un support (24) s'étendant selon la première direction (z),
- une rondelle (10),
- un élément élastique (16) porté par ledit support (24), ledit élément élastique (16) étant destiné à exercer sur le pion (14) une force dans une direction sensiblement perpendiculaire à la direction axiale pour plaquer le pion (14) contre le manchon (12) ; ledit procédé comportant les étapes suivantes :
- réaliser un orifice traversant (26) dans les feuilles conductrices (4) du matelas super isolant (6) ;
- emmancher le manchon (12) dans lesdits orifices traversants (26) de manière à plaquer les feuilles conductrices (4) contre ladite collerette (22) ;
- disposer ladite rondelle (10) sur les feuilles conductrices (4) ;
- établir une butée (19) sur l'extrémité libre (18) du manchon (12), ladite butée (19) étant propre à appliquer sur les feuilles conductrices un effort compris entre 25 déca Newton et 60 déca Newton, la collerette (22), la rondelle (10) et la butée formant un dispositif de fixation axiale des feuilles conductrices du matelas super isolant.

14. Procédé d'assemblage selon la revendication 13, dans lequel l'étape d'établissement d'une butée comprend une étape au cours de laquelle l'extrémité libre (18) du manchon est évasée.

15. Procédé d'assemblage selon la revendication 13, dans lequel l'étape d'établissement d'une butée comprend une étape de serrage de l'extrémité libre (18) du manchon.

16. Ensemble matelas super isolant et dispositif de connexion électrique, ledit dispositif de connexion électrique (2) étant conforme à la revendication 1,ledit matelas super isolant (6) comportant des feuilles conductrices (4) pourvues chacune d'au moins un orifice traversant (26), ledit manchon (12) conducteur étant agencé dans les orifices traversant (26) des feuilles conductrices, lesdites feuilles conductrices (4) étant intercalées entre la rondelle (10) et la collerette (22), ledit matelas super isolant (6) étant connecté au pion conducteur (14), ledit pion conducteur étant destiné à être fixé sur un panneau de structure (8) d'un engin spatial.

17. Engin spatial comprenant :
- une structure-support portant des panneaux de structure (8),
- un dispositif de connexion électrique selon la revendication 1, ledit au moins un pion conducteur (14) comprenant un pied (44) et une tête (42) plate, ladite tête plate (42) étant fixé par collage conducteur électriquement à un panneau de structure (8) et/ou à la structure support ;
- au moins un matelas super isolant, ledit matelas super isolant (6) étant fixé de manière amovible à ledit au moins un pion (14) par engagement du pion dans ledit manchon (12).

## Patentansprüche

1. Verbindungsvorrichtung (2) zum elektrischen Verbinden einer Superisolierdecke (6) mit einem Strukturpaneel (8) eines Raumfahrzeugs, wobei die Verbindungsvorrichtung (2) aufweist:
- eine leitfähige Buchse (12) mit einer Achse (A-A), die sich in eine erste Richtung (z) erstreckt, wobei die Buchse (12) einen sich in die erste Richtung (z) erstreckenden Träger (24) aufweist,
- einen leitfähigen Stift (14), der geeignet ist, in die Buchse (12) eingesetzt zu werden,
- ein von dem Träger (24) getragenes elastisches Element (16), wobei das elastische Element (16) geeignet ist, auf den Stift (14) eine Kraft in eine zur ersten Richtung (z) im Wesentlichen senkrechte Richtung auszuüben,
**dadurch gekennzeichnet, dass** die Buchse (12) eine Befestigungsvorrichtung (10, 18, 22) aufweist, die geeignet ist, die Superisolierdecke (6) axial zu befestigen, wobei die Befestigungsvorrichtung aufweist:
- einen die Buchse umlaufenden Kragen (22), der an einem Ende (20) der Buchse angeordnet ist und sich in einer zur ersten Richtung (z) senkrechten Ebene erstreckt,
- eine Unterlegscheibe (10), wobei die Superisolierdecke (6) bestimmt ist, zwischen der Unterlegscheibe und dem Kragen (22) eingelegt zu werden, und
- einen an dem freien Ende (18) der Buchse (12) hergestellten Anschlag (19),
und dadurch, dass das elastische Element (16) den Stift (14) gegen die Buchse (12) drückt.

2. Verbindungsvorrichtung (2) nach Anspruch 1, in welcher das elastische Element (16) einen metallischen Stab aufweist, der derart gefaltet ist, um ein Polygon mit n Seiten zu bilden, wobei n zwischen 2 und 10 und vorzugsweise n gleich 5 ist.

3. Verbindungsvorrichtung (2) nach einem der Ansprüche 1 und 2, in welcher das elastische Element (16) offen ist.

4. Verbindungsvorrichtung (2) nach einem der Ansprüche 1 bis 3, in welcher der Träger (24) die Form eines Kranzabschnitts hat, der sich über einen Winkelsektor erstreckt, der zwischen 40° und 320° beträgt.

5. Verbindungsvorrichtung (2) nach einem der Ansprüche 1 bis 4, in welcher der Träger (24) eine kreisbogenförmige Auskehlung (40) aufweist, und in welcher das elastische Element (16) in der Auskehlung (40) eingesetzt ist.

6. Verbindungsvorrichtung (2) nach einem der Ansprüche 1 bis 5, in welcher der Stift (14) einen mit einem flachen Kopf (42) versehenen Fuß (44) aufweist.

7. Verbindungsvorrichtung (2) nach Anspruch 6, in welcher der Fuß (44) eine Länge hat, die zwischen 1 Mal bis 2,5 Mal die Länge der Buchse (12) ist, und wobei die Verbindungsvorrichtung (2) einen abnehmbaren Stopper (52) aufweist, der an dem freien Ende des Fußes eingefügt ist.

8. Verbindungsvorrichtung (2) nach einem der Ansprüche 6 und 7, in welcher das freie Ende des Fußes (44) abgeschrägt oder abgerundet ist.

9. Verbindungsvorrichtung (2) nach einem der Ansprüche 1 bis 8, in welcher das elastische Element (16) ein zentrales Stabelement (54), zwei Stabzwischenelemente (56), die jeweils bezüglich des zentralen Stabelements (54) gewinkelt sind, und zwei Stabendelemente (58), die jeweils bezüglich eines Stabzwischenelements (56) gewinkelt sind, aufweist, und in welcher die Winkel (α) zwischen den Stabelementen stumpfe Winkel sind, wobei die Winkel (α) im Wesentlichen identisch sind, wenn das elastische Element (16) keinen Zwang ausgesetzt ist.

10. Verbindungsvorrichtung (2) nach Anspruch 9, in welcher die Stabendelemente (58) geeignet sind, auf den Träger (24) eine Kraft, die eine im Wesentlichen radiale Richtung hat, auszuüben, und in welcher die Länge der Stabendelemente (58) größer als die Länge der Stabzwischenelemente (56) ist.

11. Verbindungsvorrichtung (2) nach Anspruch 4 oder nach einem der Ansprüche 5 bis 10 in Kombination mit Anspruch 4, in welcher der Träger (24) zwei ebene Flächen (28, 30) aufweist, die sich in derselben Ebene erstrecken, wobei die Ebene im Wesentlichen senkrecht zur Ebene des Kragens (22) ist, wobei die ebenen Flächen (28, 30) Anlageflächen des elastischen Elements (16) sind, wenn der leitfähige Stift aus der Buchse (12) herausgenommen ist.

12. Verbindungsvorrichtung (2) nach Kombination von Anspruch 9 und 11, in welcher die Länge des zentralen Stabsegments (54) im Wesentlichen größer als die zwischen den Enden der ebenen Flächen (28, 30) des Trägers definierte Länge ist, und in welcher der Winkel (α) zwischen dem zentralen Stabsegment (54) und dem Stabzwischenelement (56) im Wesentlichen identisch mit dem Winkel (β) ist, der zwischen den ebenen Flächen (28, 30) des Trägers und der Außenfläche (36) des Trägers definiert ist.

13. Verfahren zur Montage eines Buchsenteils (10, 12, 16) einer Vorrichtung zur elektrischen Verbindung oder Verbindungsvorrichtung (2) an eine Superisolierdecke (6), wobei die Superisolierdecke (6) aus einer bis vierundzwanzig leitfähigen Schichten (4) besteht; wobei das Buchsenteil (10, 12, 16) der Verbindungsvorrichtung aufweist:
- eine leitfähige Buchse (12) mit einer Achse (A-A), die sich in eine erste Richtung (z) erstreckt und einen sich in die erste Richtung (z) erstreckenden Träger (24) aufweist, einen zum Einsetzen in die Buchse (12) geeigneten leitfähigen Stift (14); wobei die Buchse (12) aufweist: ein freies Ende (18) und ein Ende (20), das mit einem umlaufenden Kragen (22) versehen ist, der sich in einer zur ersten Richtung senkrechten Ebene erstreckt, und einen Träger (24), der sich in die erste Richtung (z) erstreckt,
- eine Unterlegscheibe (10),
- ein von dem Träger (24) getragenes elastisches Element (16), wobei das elastische Element (16) dazu bestimmt ist, auf den Stift (14) eine Kraft in eine zur axialen (ersten) Richtung im Wesentlichen senkrechte Richtung auszuüben, um den Stift (14) gegen die Buchse (12) zu drücken;
wobei das Verfahren die folgenden Schritte aufweist:
- Bilden einer Durchgangsöffnung (12) in den leitfähigen Schichten (4) der Superisolierdecke (6);
- Einsetzen der Buchse (12) in die Durchgangsöffnungen (26), so dass die leitfähigen Schichten (4) gegen den Kragen (22) gedrückt werden;
- Anordnen der Unterlegscheibe (10) an den leitfähigen Schichten (4);
- Herstellen eines Anschlags (19) an dem freien Ende (18) der Buchse (12), wobei der Anschlag (19) geeignet ist, auf die leitfähigen Schichten eine Kraft auszuüben, die zwischen 25 deka-Newton und 60 deka-Newton beträgt, wobei der Kragen (22), die Unterlegscheibe (10) und der Anschlag eine die leitfähigen Schichten der Superisolierdecke axial befestigende Vorrichtung bilden.

14. Verfahren zur Montage nach Anspruch 13, in welchem der Schritt der Herstellung eines Anschlags einen Schritt aufweist, im Verlaufe dessen das freie Ende (18) der Buchse aufgeweitet wird.

15. Verfahren zur Montage nach Anspruch 13, in welchem der Schritt der Herstellung eines Anschlags einen Schritt zum Festschrauben des freien Endes (18) der Buchse aufweist.

16. Anordnung einer Superisolierdecke und einer Vorrichtung zur elektrischen Verbindung, wobei die Vorrichtung zur elektrischen Verbindung (2) dem Anspruch 1 entspricht, wobei die Superisolierdecke (6) leitfähige Schichten (4) aufweist, die jeweils mit mindestens einer Durchgangsöffnung (26) versehen sind, die leitfähige Buchse (12) in die Durchgangsöffnungen (26) der leitfähigen Schichten eingesetzt ist, die leitfähigen Schichten (4) zwischen der Unterlegscheibe (10) und dem Kragen (22) eingelegt sind, die Superisolierdecke (6) mit dem leitfähigen Stift (14) verbunden ist, der leitfähige Stift bestimmt ist, an einem Strukturpaneel (8) eines Raumfahrzeugs befestigt zu werden.

17. Raumfahrzeug aufweisend:
- eine Trägerstruktur, die Strukturpaneele (8) trägt,
- eine Vorrichtung zur elektrischen Verbindung nach Anspruch 1, wobei der mindestens eine leitfähige Stift (14) einen Fuß (44) und einen flachen Kopf (42) aufweist, der flache Kopf (42) mithilfe einer elektrisch leitfähigen Klebung an einem Strukturpaneel (8) und/oder der Trägerstruktur befestigt ist;
- mindestens eine Superisolierdecke, wobei durch Einrücken des Stifts in die Buchse (12) die Superisolierdecke (6) auf lösbare Weise an dem mindestens einen Stift (14) befestigt wird.

## Claims

1. Device (2) for electrical connection intended to connect a super-insulating mattress (6) to a structural panel (8) of a spacecraft, said connection device (2) comprising:
- a conductive sleeve (12) having an axis (A-A) extending in a first direction (z), said sleeve (12) comprising a support (24) extending in the first direction (z),
- a conductive pin (14) suitable for being arranged in said sleeve (12),
- an elastic element (16) carried by said support (24), said elastic element (16) being suitable for exerting a force on the pin (14) in a direction substantially perpendicular to the first direction (z)
**characterized in that** the support (24) comprises a fastening device (10, 18, 22) suitable for axially fastening the super-insulating mattress (10, 18, 22), said fastening device comprising:
- a flange (22) peripheral to the sleeve located on one end of the sleeve and extending in a plan perpendicular to the first direction (z),
- a washer (10), the super-insulating mattress (6) being intended to be interposed between the washer and the flange (22), and
- a stop (19) established on the free end (18) of the sleeve (12),
and **in that** said elastic element (16) presses the pin (14) against the sleeve (12).

2. Device (2) for electrical connection according to claim 1, wherein the elastic element (16) comprises a metal rod folded in such a way as to form a polygon having n sides, with n between 2 and 10, and preferably n equal to 5.

3. Device (2) for electrical connection according to any one of claims 1 and 2, wherein the elastic element (16) is open.

4. Device (2) for electrical connection according to any one of claims 1 to 3, wherein the support (24) has the shape of a truncated ring that extends over an angular sector of between 40° and 320°.

5. Device (2) for electrical connection according to any one of claims 1 to 4, wherein the support (24) comprises a groove (40) in the shape of an arc of a circle and wherein the elastic element (16) is arranged in said groove (40).

6. Device (2) for electrical connection according to any one of claims 1 to 5, wherein the pin (14) comprises a foot (44) provided with a flat head (42).

7. Device (2) for electrical connection according to claim 6, wherein the length of the foot (44) is between 1 and 2.5 times the length of the sleeve (12) and wherein the device (2) for electrical connection comprises a removable stop (52) embedded in the free end of the foot.

8. Device (2) for electrical connection according to any one of claims 6 and 7, wherein the free end of the foot (44) is beveled or rounded.

9. Device (2) for electrical connection according to any one of claims 1 to 8, wherein the elastic element (16) comprises a central rod segment (54), two intermediate rod segments (56), each elbowed with respect to the central rod segment (54), and two end rod segments (58), each elbowed with respect to an intermediate rod segment (56), and wherein the angles (α) between the rod segments are obtuse angles, said angles (α) being substantially identical, when the elastic element (16) is not stressed.

10. Device (2) for electrical connection according to claim 9, wherein the end rod segments (58) are suitable for exerting, on the support (24), a force having a substantially radial direction and wherein the length of the end rod segments (58) is greater than the length of the intermediate rod segments (56).

11. Device (2) for electrical connection according to claim 4 or at any one of claims 5 to 10 taken in combination with claim 4, wherein the support (24) comprises two flat faces (28, 30) extending in the same plane, said plane being substantially perpendicular to the plane of the flange (22), said flat faces (28, 30) being bearing faces for the elastic element (16), when the conductive pin is removed from said sleeve (12).

12. Device (2) for electrical connection according to the combination of claims 9 and 11, wherein the length of the central rod segment (54) is substantially greater than the length defined between the ends of the flat faces (28, 30) of the support, and wherein the angle (α) between the central rod segment (54) and the intermediate rod segment (56) is substantially identical to the angle (β) defined between the flat faces (28, 30) of the support and the outer face (36) of the support.

13. Method for assembling a female portion (10, 12, 16) of a device for electrical connection to a super-insulating mattress (6), said super-insulating mattress (6) comprising from one to twenty-four conductive sheets (4); the female portion (10, 12, 16) of the device for electrical connection comprising:
- a conductive sleeve (12) having an axis (A-A) extending in a first direction (z) and comprising a support (24) extending in the first direction (z), a conductive pin being intended to be arranged in the sleeve (12) ; said sleeve (12) comprising a free end (18) and an end (20) provided with a peripheral flange (22) extending in a plane perpendicular to the first direction (z), and a support (24) extending in the first direction (z),
- a washer (10),
- an elastic element (16) carried by said support (24), said elastic element (16) being intended to exert a force on the pin (14) in a direction substantially perpendicular to the axial direction in order to press the pin (14) against the sleeve (12); said method comprising the following steps:
- creating a through-hole (26) in the conductive sheets (4) of the super-insulating mattress (6);
- fitting the sleeve (12) into said through-holes (26) in such a way as to press the conductive sheets (4) against said flange (22);
- positioning said washer (10) on the conductive sheets (4);
- establishing a stop (19) on the free end (18) of the sleeve (12), said stop (19) being suitable for applying, onto the conductive sheets, a force between 25 deca Newton and 60 deca Newton; the flange (22), the washer (10), and the stop forming an axially fastening device of the conductive sheets of the super-insulating mattress.

14. Assembly method according to claim 13, wherein the step of establishing a stop comprises a step during which the free end (18) of the sleeve is flared.

15. Assembly method according to claim 13, wherein the step of establishing a stop comprises a step of clamping the free end (18) of the sleeve.

16. Assembly of a super-insulating mattress and device for electrical connection, said device (2) for electrical connection being according to claim 1, said super-insulating mattress (6) comprising conductive sheets provided each with at least a through-hole (26), said conductive sleeve (12) being arranged in the through-hole (26) of the conductive sheets , said conductive sheets (4) being interposed between the washer (10) and the flange (22), said super-insulating mattress (6) being connected to the conductive pin (14) , said conductive pin (14) being intended to be connected to be fastened onto a structural panel (8) of a spacecraft.

17. Spacecraft comprising:
- a supporting structure carrying structural panels (8),
- a device for electrical connection according to claim 1, said at least one conductive pin (14) comprising a foot (44) and a flat head (42), said flat head (42) being fastened via electrically conductive gluing to a structural panel (8) and/or to the supporting structure;
- at least one super-insulating mattress, said super-insulating mattress (6) being removably fastened to said at least one said pin (14) via insertion of the pin into said sleeve (12).
